(19) Europäisches Patentamt
European Patent Office
Office européen des brevets

(11) **EP 4 475 328 A1**

(12) **EUROPEAN PATENT APPLICATION**
published in accordance with Art. 153(4) EPC

(43) Date of publication:
**11.12.2024 Bulletin 2024/50**

(21) Application number: **22960382.4**

(22) Date of filing: **30.09.2022**

(51) International Patent Classification (IPC):
***H01M 50/547*** *(2021.01)*

(52) Cooperative Patent Classification (CPC):
**H01M 50/547;** Y02E 60/10

(86) International application number:
**PCT/CN2022/123501**

(87) International publication number:
**WO 2024/065769 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
(Hong Kong) Limited
Central, Central And Western District (HK)**

(72) Inventors:
• **TANG, Yu**
**Ningde, Fujian 352100 (CN)**

• **YANG, Haiqi**
**Ningde, Fujian 352100 (CN)**
• **XU, Chenyi**
**Ningde, Fujian 352100 (CN)**
• **WANG, Wenli**
**Ningde, Fujian 352100 (CN)**
• **HUANG, Xiaoteng**
**Ningde, Fujian 352100 (CN)**
• **WANG, Peng**
**Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **BATTERY AND ELECTRICAL DEVICE**

(57) The embodiments of the present application provide a battery and an electricity consuming apparatus, the battery includes a case (2) and a battery cell (1), the case (2) includes a case body (21), and a top cover (22) and a bottom cover (23) arranged opposite to each other along the first direction on two sides of the case body (21); the battery cell (1) is arranged inside the case (2), and the battery cell (1) includes an electrode terminal (11), wherein a gap (3) is provided between the battery cell (1) and at least one of the bottom cover (23) and the case body (21), and the electrode terminal (11) is arranged toward the gap (3).

Fig. 9

## Description

## TECHNICAL FIELD

The present application relates to the field of battery technology, particularly a battery and an electricity consuming apparatus.

## BACKGROUND

With the promotion of the concept of energy conservation and emission reduction, there are more and more fields using electricity as driving energy. Therefore, the demand for batteries in various fields is also increasing, and the development of battery technology is becoming increasingly important for the development of other fields.

In most existing batteries, a certain reserved space is required between the case of the battery and the battery cell accommodated in the case to meet electrical safety. However, the arrangement of the reserved space results in poor utilization rate of the space inside the case, which in turn makes the structure of the battery not compact enough.

## SUMMARY

In view of the above issue, the present application provides a battery and an electricity consuming apparatus, which has a high utilization rate of internal space and a relatively compact structure.

In a first aspect, the embodiments of the present application provide a battery, which includes a case and a battery cell. The case includes a case body, and a top cover and a bottom cover arranged opposite to each other along a first direction on two sides of the case body; the battery cell is arranged inside the case, and the battery cell includes an electrode terminal. A gap is arranged between the battery cell and at least one of the bottom cover and the case body, and the electrode terminal is arranged toward the gap.

In the technical solutions of some embodiments of the present application, the battery includes a case and a battery cell. The case includes a case body, and a top cover and a bottom cover arranged opposite to each other in the first direction on two sides of the case body. The case body can be used to accommodate the battery cell. The battery cell is arranged inside the case, and a gap is arranged between the battery cell and at least one of the bottom cover and the case body. When the battery is impacted by the external force, the gap between the battery cell and the bottom cover, the case body can play a role of cushioning collision, making it less likely for the battery cell to collide with the case body, thus improving the safety performance of the battery. The battery cell has an electrode terminal for inputting or outputting current. The electrode terminal is arranged toward the gap, so that the gap for cushioning collision within the battery can also serve as a reserved space for electrical safety between the electrode terminal and the case, thereby improving the space utilization rate inside the battery and making the structure of the battery more compact.

According to the embodiments of the present application in the first aspect, the gap includes a first gap between the battery cell and the bottom cover, and the electrode terminal orientates toward the first gap. The battery cell further includes a bottom opposite to the electrode terminal in the first direction, and the bottom is connected to the top cover. By providing a first gap between the battery cell and the bottom cover, when the battery is impacted by the external force, the first gap can cushion the collision between the battery cell and the bottom cover, thereby improving the safety performance of the battery. By connecting the bottom of the battery cell to the top cover and orientating the electrode terminal toward the first gap, the first gap for cushioning the collision between the battery cell and the bottom cover in the battery can also serve as a reserved space for electrical safety between the electrode terminal and the case, thereby improving the space utilization rate inside the battery and making the structure of the battery more compact.

According to any of the aforementioned embodiments of the present application in the first aspect, the top cover thickness $T_1$ of the top cover and the bottom cover thickness $T_2$ of the bottom cover satisfy the following relationship: $0.3mm \leq T_1 + T_2 \leq 16.5mm$. By setting the relationship between the top cover thickness $T_1$ and the bottom cover thickness $T_2$ reasonably, the top cover and the bottom cover are less likely to have excessive thickness while meeting the structural strength.

According to any of the aforementioned embodiments of the present application in the first aspect, the battery cell further includes a side wall connected between the electrode terminal and the bottom, wherein a plurality of battery cells are arranged side by side in a second direction and/or a third direction, and the side walls of two adjacent battery cells are connected with each other, and any two of the first direction, the second direction, and the third direction intersect with each other. By arranging the plurality of battery cells side by side in the second direction and/or the third direction, the electrode terminals of the plurality of battery cells orientate toward the first gap, thereby further improving the space utilization rate inside the battery, and making the structure of the battery more compact. The side-by-side arrangement of the plurality of battery cells also enhances the structural strength of the battery.

According to any of the aforementioned embodiments of the present application in the first aspect, the number $n$ of battery cells, the weight $G$ of single battery cell, the top cover thickness $T_1$ of the top cover, and the bottom cover thickness $T_2$ of the bottom cover satisfy the following relationship: $0.1 \leq (T_1 + T_2)/n * G \leq 16.5$. By reasonably setting the number $n$ of battery cells, the weight $G$ of single battery cell, and the relationship between the top cover thickness $T_1$ and the bottom cover thickness $T_2$, the top cover and bottom cover are less likely to have excessive thickness while meeting the structural strength for bearing the battery cell.

According to any of the aforementioned embodiments of the present application in the first aspect, the gap includes a second gap between the battery cell and the case body, and the electrode terminal orientates toward the second gap. By providing a second gap between the battery cell and the case body, the second gap can cushion the collision between the battery cell and the case body when the battery is impacted by the external force, thereby improving the safety performance of the battery. By orienting the electrode terminal of the battery cell toward the second gap, the second gap for cushioning the collision between the battery cell and the case body can also serve as a reserved space for electrical safety between the electrode terminal and the case, thereby improving the space utilization rate inside the battery and making the structure of the battery more compact.

According to any of the aforementioned embodiments of the present application in the first aspect, the case further includes a bottom plate arranged between the top cover and the bottom cover. The battery cell further includes a bottom opposite to the electrode terminal in the second direction, and a side wall connected between the electrode terminal and the bottom. The side wall is connected to the bottom plate, the bottom plate is spaced apart from the bottom cover, and the first direction intersects with the second direction. By providing a bottom plate between the top cover and bottom cover to support the battery cell, the spacing distribution of the bottom plate and bottom cover allows the space between the bottom plate and the bottom cover to cushion the collision between the battery cell and the bottom cover, thereby improving the safety performance of the battery.

According to any of the aforementioned embodiments of the present application in the first aspect, the top cover thickness $T_1$ of the top cover and the bottom plate thickness $T_3$ of the bottom plate satisfy the following relationship: 0.3 mm $\leq T_1 + T_3 \leq$ 16.5mm. By setting the relationship between the top cover thickness $T_1$ and the bottom plate thickness $T_3$ reasonably, the top cover and the bottom plate are less likely to have excessive thickness while meeting the structural strength.

According to any of the aforementioned embodiments of the present application in the first aspect, a plurality of battery cells are arranged side by side in the first direction and/or the third direction, and the side walls of two adjacent battery cells are connected with each other, and any two of the first direction, the second direction, and the third direction intersect with each other. By arranging the plurality of battery cells side by side in the first direction and/or the third direction, the electrode terminals of the battery cells orientate toward the second gap, thereby further improving the space utilization rate inside the battery and making the structure of the battery more compact. The side-by-side arrangement of the plurality of battery cells also enhances the structural strength of the battery.

According to any of the aforementioned embodiments of the present application in the first aspect, the number r. of battery cells, the weight $G$ of single battery cell, the top cover thickness $T_1$ of the top cover, and the bottom plate thickness $T_3$ of the bottom plate satisfy the following relationship: 0.1 $\leq (T_1 + T_3)/n$ * G $\leq$ 16.5. By setting the number $n$ of battery cells, the weight G of single battery cell, and the relationship between the top cover thickness $T_1$ and the bottom plate thickness $T_3$ reasonably, the top cover and bottom plate are less likely to have excessive thickness while meeting the structural strength for bearing the battery cell.

According to any of the aforementioned embodiments of the present application in the first aspect, a buffer component for providing cushioning when the battery is impacted is filled between the top cover and the bottom cover. By providing a buffer component between the top cover and the bottom cover, the collision resistance of the battery is improved.

According to any of the aforementioned embodiments of the present application in the first aspect, the number of battery cells is less than or equal to 10. By setting a reasonable number of battery cells, the case does not need to bear excessive weight of battery cells, so that the volume required by the case does not need to be too large, thereby improving the structural utilization rate of the battery.

The embodiments of the present application in the second aspect provide an electricity consuming apparatus, which includes the battery in any of the above embodiments, and the battery is used to provide electrical energy.

## BRIEF DESCRIPTION OF THE DRAWINGS

In order to provide a clearer explanation of the technical solution of the embodiments of the present application, a brief introduction will be given to the accompanying drawings required in the embodiments of the present application. It is evident that the accompanying drawings described below are only some embodiments of the present application. For the skilled person in the art, other accompanying drawings can be obtained based on the drawings without any creative effort.

Fig. 1 is a structural schematic diagram of a vehicle according to some embodiments of the present application;
Fig. 2 is a structural schematic diagram of a battery in some embodiments of the present application;
Fig. 3 is a cross-sectional schematic diagram of the electrode terminal orientated toward the gap between the battery cell and the bottom cover in some embodiments of the present application;
Fig. 4 is a cross-sectional schematic diagram of battery cells arranged side by side in the second direction in some embodiments of the present application;

Fig. 5 is a cross-sectional schematic diagram of battery cells arranged side by side in the third direction in some embodiments of the present application;

Fig. 6 is a cross-sectional schematic diagram of the electrode terminal orientated toward the gap between the battery cell and the case body in some embodiments of the present application;

Fig. 7 is a cross-sectional schematic diagram of the electrode terminal orientated toward the gap between the battery cell and the case body in some other embodiments of the present application;

Fig. 8 is a cross-sectional schematic diagram of battery cells arranged side by side in the first direction in some embodiments of the present application;

Fig. 9 is a cross-sectional schematic diagram of battery cells arranged side by side in the third direction in some other embodiments of the present application.

In the accompanying drawings, the drawings are not drawn to the actual scale.

The description of the reference signs:

Vehicle 1000;
Battery 100; Controller 200; Motor 300;
Battery cell 1; Electrode terminal 11; Bottom 12; Side wall 13; Large sidewall 13a; Small sidewall 13b;
Case 2; Case body 21; Top cover 22; Bottom cover 23; Bottom plate 24;
Gap 3; First gap 31; Second gap 32;
First direction X;
Second direction Y;
Third direction Z.

DETAILED DESCRIPTION

The following will provide a further detailed description of the embodiments of the present application in conjunction with the accompanying drawings and embodiments. The detailed description and accompanying drawings of the following embodiments are used to exemplify the principles of the present application, but cannot be used to limit the scope of the present application, that is, the present application is not limited to the described embodiments.

In the description of the present application, it should be noted that unless otherwise specified, "multiple" means two or more; the orientation or positional relationship indicated by the terms "up", "down", "left", "right", "inside", "outside" is only for the convenience of describing and simplifying the present application, rather than indicating or implying that the device or component referred to must have a specific orientation, be constructed and operated in a specific orientation, and therefore cannot be understood as a limitation to the present application. In addition, the terms "first", "second", "third", etc. are only used for the purpose of the description and cannot be understood as indicating or implying relative importance. 'Vertical' is not limited to being strictly vertical, but allows an error within the allowable range. 'Parallel' is not limited to being strictly parallel, but allows an error within the allowable range.

The directional words appearing in the following description are all the directions shown in the figures and do not limit the specific structure of the present application. In the description of the present application, it should be noted that unless otherwise specified and limited, the terms "install", "connected with", and "connect" should be broadly understood. For example, they can be fixed connection, detachable connection, or integrated connection; they can be directly connected, or indirectly connected through an intermediate medium, or they can be communicated between interiors of the two components. For the skilled person in the art, the specific meanings of the above terms in the present application can be understood based on specific circumstances.

At present, based on the development of the market situation, the application of power battery is becoming increasingly widespread. Power battery is not only used in energy storage power systems such as hydropower, firepower, wind power, and solar power plant, but also widely used in electric vehicle such as electric bicycle, electric motorcycle, and electric automobile, as well as in various fields such as military equipment and aerospace. With the continuous expansion of the application field of power battery, its market demand is also constantly expanding.

The inventors find that with the development of battery technology, people increasingly hope that the battery has a more compact structure. In most existing battery, a certain reserved space is often required between the electrode terminal of the battery cell and the case to meet the electrical safety of the battery. Due to the fact that the electrode terminal of the battery cell often faces the top cover of the case, the reserved space is often disposed between the battery cell and the top cover of the case, and gaps are required for cushioning collisions in multiple directions between the battery cell and the case. Therefore, the separate arrangement of the gaps for cushioning collisions and the reserved space results in poor utilization rate of space inside the case, which in turn leads to an insufficiently compact battery structure.

In order to improve the utilization rate of the internal space of the battery so that the battery has a relatively compact structure, the applicant reached and found that the gap used for cushioning collisions in the battery can be disposed as the reserved space required for electrical safety between the electrode terminal and the case.

For example, the case includes a case body and a bottom cover, and the gap between the battery cell and the case body or between the battery cell and the bottom cover is disposed as the reserved space required for electrical safety between the electrode terminal and the case body, with the electrode terminal orientated toward the gap.

In such a battery, when the battery is impacted by the external force, the gap between the battery cell and the case body or between the battery cell and the bottom cover can play a role of cushioning the collision. Orienting the electrode terminal toward the gap between the battery cell and the case body or between the battery cell and the bottom cover allows the gap used for cushioning collisions within the battery to also serve as a reserved space for electrical safety between the electrode terminal and the case, thereby improving the space utilization rate in the battery and making the structure of the battery more compact.

The battery mentioned in the embodiments of the present application refers to a single physical module that includes one or more battery cells to provide higher voltage and capacity. For example, the battery mentioned in the present application may include battery module or battery pack, etc. Battery generally include a case used to encapsulate one or more battery cells and the case can prevent liquid or other foreign objects from affecting the charging or discharging of the battery cell. This type of battery is suitable for various electricity consuming apparatuses that use batteries, such as mobile phones, portable devices, laptops, battery cars, electric toys, electric tools, electric vehicles, ships and spacecrafts. For example, the spacecrafts include airplanes, rockets, space shuttles, and spacecrafts, etc. The battery is used to provide electrical energy for the aforementioned electricity consuming apparatus.

The electricity consuming apparatus provided in some embodiments of the present application can be vehicles, mobile phones, portable devices, laptops, ships, spacecrafts, electric toys, electric tools, and so on. The vehicle can be a fuel powered vehicle, a gas powered vehicle, or a new energy vehicle. The new energy vehicle can be a pure electric vehicle, a hybrid electric vehicle, or an extended range vehicle, etc. The spacecraft includes an airplane, a rocket, a space shuttle, and a spacecraft, among others. The electric toys include fixed or mobile electric toys, such as a game console, an electric car toy, an electric boat toy, and an electric airplane toy. The electric tools include metal cutting electric tools, grinding electric tools, assembly electric tools, and railway electric tools, such as an electric drill, an electric grinder, an electric wrench, an electric screwdriver, an electric hammer, an impact drill, a concrete vibrator, and an electric planer.

It should be understood that the technical solution described in the embodiments of present application is not only applicable to the battery and the electricity consuming apparatus described above, but can also be applicable to all other batteries including the case and the electricity consuming apparatuses using the battery. However, for the sake of simplicity, the following embodiments are explained taking the electric vehicle as an example.

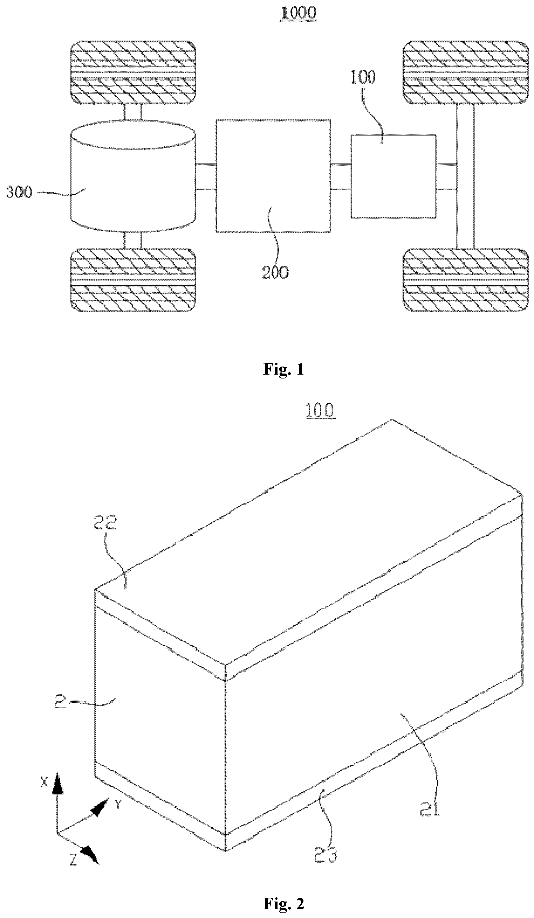

Please refer to Fig. 1, which is a structural schematic diagram of a vehicle 1000 provided in some embodiments of the present application. The vehicle 1000 can be a fuel powered vehicle, a gas powered vehicle, or a new energy vehicle. The new energy vehicle can be a pure electric vehicle, a hybrid electric vehicle, or an extended range vehicle, etc. The interior of the vehicle 1000 is provided with a battery 100, which can be installed in the bottom, the front, or the rear of the vehicle 1000. The battery 100 can be used for the power supply of the vehicle 1000, for example, it can serve as the operating power supply of the vehicle 1000. The vehicle 1000 can further include a controller 200 and a motor 300, and the controller 200 is used to control the battery 100 to supply power to the motor 300, for example, for the starting, navigation, and operating power requirements of the vehicle 1000.

In some embodiments of present application, the battery 100 can not only serve as the operating power source for the vehicle 1000, but also as the driving power source for the vehicle 1000, replacing or partially replacing the fuel or the natural gas to provide the driving power for the vehicle 1000.

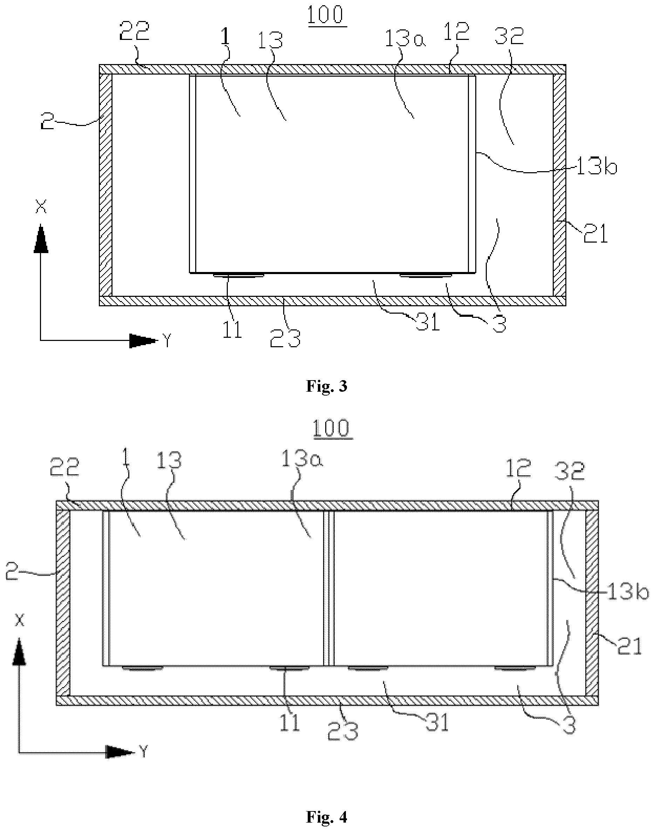

Fig. 2 is a structural schematic diagram of the battery 100 in some embodiments of the present application, and Fig. 3 is a cross-sectional view of the electrode terminal 11 orientated toward the gap 3 between the battery cell 1 and the bottom cover 23 in some embodiments of the present application. The X direction in the figures is the first direction X, the Y direction in the figures is the second direction Y, and the Z direction in the figures is the third direction Z. Any two of the first direction X, the second direction Y, and the third direction Z intersect with each other.

As shown in Figs 2 and 3, the present application provides a battery 100, which includes a case 2 and a battery cell 1. The case 2 includes a case body 21, and a top cover 22 and a bottom cover 23 arranged opposite to each other along the first direction X on both sides of the case body 21. The battery cell 1 is arranged inside the case 2, and the battery cell 1 includes an electrode terminal 11. There is a gap 3 between the battery cell 1 and at least one of the bottom cover 23 and the case body 21, and the electrode terminal 11 is arranged toward the gap 3.

In some embodiments, the case body 21, the top cover 22, and the bottom cover 23 can jointly define an accommodation space for accommodating the battery cell 1, and the case 2 can to some extent avoid liquid or other foreign objects affecting the charging or discharging of the battery cell 1. For example, the case body 21 can be integrally formed with the bottom cover 23 to be a hollow structure with an opening at one end, and the top cover 22 can be a plate-like structure. The top cover 22 covers and closes the open side of the hollow structure formed by the case body 21 and the bottom cover 23, so that the case body 21, the top cover 22, and the bottom cover 23 can jointly define the accommodation space. For example, the top cover 22 can be integrally formed with a portion of the case body 21 to be a hollow structure with an opening at one end, and the bottom cover 23 can be integrally formed with another portion of the case body 21 to be a hollow structure with an opening at one end. The opening side of the hollow structure formed by the top cover 22 and a portion of the case body 21 covers and closes the opening side of the hollow structure formed by the bottom cover 23 and another portion of the case body 21, so that the case body 21, the top cover 22 and the bottom cover 23 can jointly define the accommodation space. In addition, the shape of the case 2 can be various, for example, cylindrical or cuboid.

In some embodiments, there may be one or multiple battery cells 1 in the battery 100. Multiple battery cells 1 can be connected in series, parallel, or hybrid. Hybrid connection refers to both series and parallel connection among multiple battery cells 1. Multiple battery cells 1 can be directly connected in series, parallel, or hybrid together, and then the whole composed of multiple battery cells 1 can be accommodated in the case 2. Of course, multiple battery cells 1 can also be connected in series, parallel, or hybrid to form a modular form of the battery 100. The modular of the multiple battery 100 can then be connected in series, parallel, or hybrid to form a whole and accommodated in the case 2. The battery 100 can further include other structures, for example, the battery 100 can further include other structures. For example, the battery 100 can further include a busbar (not shown in the figures), which is used to achieve electrical connection between multiple battery cells 1.

In some embodiments, the types of battery cell 1 can be various. For example, the battery cell 1 can be lithium ion secondary battery cell 1, lithium ion primary battery cell 1, lithium sulfur battery cell 1, sodium lithium ion battery cell 1, sodium ion battery cell 1, or magnesium ion battery cell 1, etc. The shape of battery cell 1 can be various, for example, cylindrical, flat, cuboid, or other shapes.

In some embodiments, the electrode terminal 11 is used to output or input electrical energy from or into the battery cell 1. For example, the electrode terminal 11 can be used for electrical connection to the electrode assembly of the battery cell 1 (not shown in the figures) to achieve output or input of electrical energy from or into the battery cell 1.

In some embodiments, there may be a gap 3 between the battery cell 1 and the bottom cover 23 that can buffer collisions between the battery cell 1 and the bottom cover 23, or a gap 3 between the battery cell 1 and the case body 21 that can buffer collisions between the battery cell 1 and the case body 21. In some other embodiments, there is a gap 3 that can buffer collisions both between the battery cell 1 and the bottom cover 23 and between the battery cell 1 and the case body 21. The electrode terminal 11 can orientate toward the gap 3 between the battery cell 1 and the bottom cover 23, and/or the electrode terminal 11 can orientate toward the gap 3 between the battery cell 1 and the case body 21.

In the technical solutions of some embodiments of the present application, the battery 100 includes a case 2 and a battery cell 1. The case 2 includes a case body 21 and a top cover 22 and a bottom cover 23 arranged opposite to each other along the first direction X on both sides of the case body 21. The case 2 can be used to accommodate the battery cell 1. The battery cell 1 is located inside the case 2, and there is a gap 3 between the battery cell 1 and at least one of the bottom cover 23 and the case body 21. When the battery 100 is impacted by the external force, the gap 3 between the battery cell 1 and the bottom cover 23, the case body 21 can play a role of cushioning the collision, making it less likely for the battery cell to collide with the case 2, thus improving the safety performance of the battery 100. The battery cell 1 has an electrode terminal 11 for inputting or outputting current. The electrode terminal 11 is arranged toward the gap 3, so that the gap 3 used for cushioning collisions within the battery 100 can also serve as a reserved space for electrical safety between the electrode terminal 11 and the case 2, thereby improving the space utilization rate in the battery 100 and making the structure of the battery 100 more compact.

Please refer to Fig. 3. In some embodiments, the gap 3 includes a first gap 31 between the battery cell 1 and the bottom cover 23, with the electrode terminal 11 orientated toward the first gap 31. The battery cell 1 further includes a bottom 12 arranged opposite to the electrode terminal 11 in the first direction X, and the bottom 12 is connected to the top cover 22.

The size of the first gap 31 can be set according to the specific structure of the battery cell 1 and the specific structure of the case 2, so that the first gap 31 can cushion the collision between the battery cell 1 and the bottom cover 23, and make the structure of the battery 100 more compact. In some embodiments, the first gap 31 between battery cell 1 and bottom cover 23 can refer to the gap 3 between the electrode terminal 11 of battery cell 1 and the bottom cover 23. In some embodiments, the first gap 31 may be greater than or equal to 7mm.

There are various ways to connect the bottom 12 of the battery cell 1 with the top cover 22. In some embodiments, the bottom 12 of the battery cell 1 can be connected with the top cover 22 through adhesive material or welded with the top cover 22. In some other embodiments, the bottom 12 of the battery cell 1 can be connected to the top cover 22 through bolts.

By providing a first gap 31 between the battery cell 1 and the bottom cover 23, the first gap 31 can cushion the collision between the battery cell 1 and the bottom cover 23 when the battery 100 is impacted by the external force, thereby improving the safety performance of the battery 100. By connecting the bottom 12 of the battery cell 1 to the top cover 22 and orientating the electrode terminal 11 toward the first gap 31, the first gap 31 for cushioning the collision between the battery cell 1 and the bottom cover 23 in battery 100 can also serve as a reserved space for electrical safety between the electrode terminal 11 and the case 2, thereby improving the space utilization rate in battery 100 and making the structure of the battery 100 more compact.

In some embodiments, the top cover thickness $T_1$ of the top cover 22 and the bottom cover thickness $T_2$ of the bottom cover 23 satisfy the following relationship: $0.3mm \leq T_1 + T_2 \leq 16.5mm$. When the sum of the top cover thickness $T_1$ and the bottom cover thickness $T_2$ is less than 0.3mm, the structural strength of the case 2 is relatively small, and the case 2 is prone to deformation or even fracture. When the sum of the top cover thickness $T_1$ and the bottom cover thickness $T_2$ is greater than 16.5mm, the top cover 22 and bottom cover 23 which are excessively thick can easily make the battery 100 have a larger volume and weight, which can lead to over design of the battery 100 easily.

The top cover thickness $T_1$ can refer to the thickness at any location on the top cover 22, and the top cover thickness $T_1$ can also refer to the average thickness at multiple locations on the top cover 22. In some embodiments, the top cover thickness $T_1$ can refer to the minimum thickness possessed by the top cover 22. In other embodiments, the top cover thickness $T_1$ can refer to the average thickness of the entire top cover 22.

The bottom cover thickness $T_2$ can refer to the thickness at any location on the bottom cover 23, and the bottom cover thickness $T_2$ can also refer to the average thickness at multiple locations on the bottom cover 23. In some embodiments, the bottom cover thickness $T_2$ can refer to the minimum thickness possessed by the bottom cover 23. In other embodiments, the bottom cover thickness $T_2$ can refer to the average thickness of the entire bottom cover 23.

In some embodiments, the top cover thickness $T_1$ can be greater than the bottom cover thickness $T_2$, so that the top cover 22 connected to the bottom 12 of the battery cell 1 has a good structural strength.

By reasonably setting the relationship between the top cover thickness $T_1$ and the bottom cover thickness $T_2$, the top cover 22 and the bottom cover 23 are less likely to have excessive thickness while meeting the structural strength.

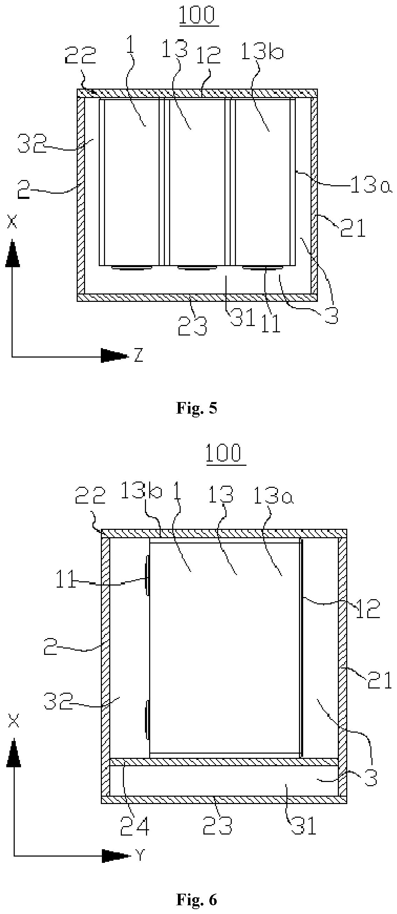

Fig. 4 is a cross-sectional schematic diagram of the battery cell 1 arranged side by side in the second direction Y in some embodiments of the present application, and Fig. 5 is a cross-sectional schematic diagram of the battery cell 1 arranged side by side in the third direction Z in some embodiments of the present application.

As shown in Figs. 4 and 5, in some embodiments, the battery cell 1 further includes a side wall 13 connected between the electrode terminal 11 and the bottom 12, wherein multiple battery cells 1 are arranged side by side in the second direction Y and/or the third direction Z, and the adjacent side walls 13 of the two battery cells 1 are connected with each other, and any two of the first direction X, the second direction Y, and the third direction Z intersect with each other.

By arranging multiple battery cells 1 side by side in the second direction Y and/or the third direction Z, the electrode terminals 11 of the multiple battery cells 1 are all oriented toward the first gap 31, thereby further improving the space utilization rate in the battery 100 and making the structure of the battery 100 more compact. The side-by-side arrangement of multiple battery cells 1 also improves the structural strength of the battery 100.

In some embodiments, the number $n$. of the battery cells 1, the weight $G$ of a single battery cell 1, the top cover thickness $T_1$ of the top cover 22, and the bottom cover thickness $T_2$ of the bottom cover 23 satisfy the following relationship: $0.1 \leq (T_1 + T_2)/n * G \leq 16.5$. When the ratio of the sum of the top cover thickness $T_1$ and the bottom cover thickness $T_2$ to the total weight of all battery cells 1 is less than 0.1, the structural strength of the case 2 is relatively small, and the case 2 is susceptible to deformation or even fracture due to the weight of the battery cells 1. When the ratio of the sum of the top cover thickness $T_1$ and the bottom cover thickness $T_2$ to the total weight of all battery cells 1 is greater than 16.5, the top cover 22 and bottom cover 23 which are excessively thick can easily cause battery 100 to have a larger volume and weight, which leading to over design of the battery 100 easily.

The unit of the weight $G$ of the battery cell 1 is kg, and the unit of the top cover thickness $T_1$ and the bottom cover thickness $T_2$ is mm. Among them, the definition of the top cover thickness $T_1$ and the bottom cover thickness $T_2$ can be the same as the definition of the top cover thickness $T_1$ and the bottom cover thickness $T_2$ in the aforementioned embodiments.

By reasonably setting the number $n$ of the battery cells 1, the weight $G$ of single battery cell 1, and the relationship between the top cover thickness $T_1$ and the bottom cover thickness $T_2$, the top cover 22 and bottom cover 23 are less likely to have excessive thickness, while meeting the structural strength for bearing the battery cell 1.

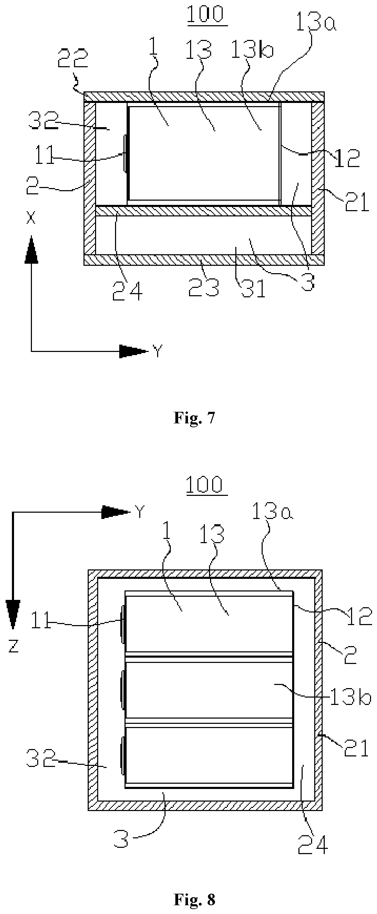

Fig. 6 is a cross-sectional schematic diagram of the electrode terminal 11 orientated toward the gap 3 between the battery cell 1 and the case body 21 in some embodiments of the present application, and Fig. 7 is a cross-sectional schematic diagram of the electrode terminal 11 orientated toward the gap 3 between the battery cell 1 and the case body 21 in some other embodiments of the present application.

As shown in Figs. 6 and 7, in some embodiments, the gap 3 includes a second gap 32 between the battery cell 1 and the case body 21, with electrode terminal 11 orientating the second gap 32.

The size of the second gap 32 can be set according to the specific structure of the battery cell 1 and the specific structure of the case 2, so that the second gap 32 can cushion the collision between the battery cell 1 and the case body 21, and the structure of battery 100 is more compact. In some embodiments, the second gap 32 between the battery cell 1 and the case body 21 can refer to the gap 3 between the electrode terminal 11 of the battery cell 1 and the case body 21. In some embodiments, the second gap 32 may be greater than or equal to 4mm.

In some embodiments, there are second gaps 32 between two sides of the battery cell 1 in the second direction Y and/or the third direction Z and the case body 21, making it less likely for the battery cell 1 and the case body 21 to collide with each other in multiple directions. In some embodiments, the electrode terminal 11 of the battery cell 1 can be arranged toward at least one of the second gaps 32.

In some embodiments, when the electrode terminal 11 of the battery cell 1 is arranged toward the second gap 32, the side wall 13 of the battery cell 1 can be connected to the top cover 22, thereby limiting the movement of the battery cell 1 within the case 2 and improving the space utilization rate in the battery 100, making the structure of the battery 100 more compact.

By providing a second gap 32 between the battery cell 1 and the case body 21, the second gap 32 can cushion the collision between the battery cell 1 and the case body 21 when the battery 100 is impacted by the external force, thereby improving the safety performance of the battery 100. By orienting the electrode terminal 11 of the battery cell 1 toward the second gap 32, the second gap 32 for cushioning the collision between the battery cell 1 and the case body in the battery 100 can also serve as a reserved space for electrical safety between the electrode terminal 11 and the case 2, thereby improving the space utilization rate inside the battery 100 and making the structure of the battery 100 more compact.

Please continue to refer to Figs. 6 and 7. In some embodiments, the case 2 further includes a bottom plate 24 arranged between the top cover 22 and the bottom cover 23. The battery cell 1 further includes a bottom 12 opposite the electrode terminal 11 in the second direction Y and a side wall 13 connected between the electrode terminal 11 and the bottom 12. The side wall 13 is connected to the bottom plate 24, and the bottom plate 24 is spaced apart from the bottom cover 23. The first direction X intersects with the second direction Y

In some embodiments, the bottom plate 24 can be arranged parallel to the bottom cover 23 or the top cover 22, and the two ends of the bottom plate 24 in the second direction Y and/or the third direction Z can be connected to the case body 21.

In some embodiments, the distance between the bottom plate 24 and the bottom cover 23 may be slightly less than or equal to the size of the first gap 31.

There can be various connection ways between the side wall 13 of the battery cell 1 and the bottom plate 24. In some embodiments, the side wall 13 of the battery cell 1 can be connected to the bottom plate 24 through adhesive material or welded to the bottom plate 24. In some other embodiments, the side wall 13 of the battery cell 1 can be connected to the bottom plate 24 through bolts.

In some embodiments, the side wall 13 of the battery cell 1 may include a large side wall 13a and a small side wall 13b, with the surface area of the large side wall 13a being greater than that of the small side wall 13b. The location where the side wall 13 of battery cell 1 and the bottom plate 24 connect can be reasonably selected according to the structure and the size of case 2 and the battery cell 1. In some embodiments, the large side wall 13a of the battery cell 1 can be arranged to be connected to the bottom plate 24. In some other embodiments, the small side wall 13b of the battery cell 1 can be arranged to be connected to the bottom plate 24.

By providing a bottom plate 24 between the top cover 22 and the bottom cover 23 to support the battery cell 1, the spacing distribution between the bottom plate 24 and the bottom cover 23 enables the space between the bottom plate 24 and the bottom cover 23 to cushion the collision between the battery cell 1 and the bottom cover 23, thereby improving the safety performance of the battery 100.

In some embodiments, the top cover thickness $T_1$ of the top cover 22 and the bottom plate thickness $T_3$ of the bottom plate 24 satisfy the following relationship: $0.3mm \leq T_1 + T_3 \leq 16.5mm$. When the sum of the top cover thickness $T_1$ and the bottom plate thickness $T_3$ is less than 0.3mm, the structural strength of the case 2 is relatively small, and the case 2 is prone to deformation or even fracture. When the sum of the top cover thickness $T_1$ and the bottom plate thickness $T_3$ is greater than 16.5mm, the top cover 22 and bottom plate 24 which are excessively thick can easily make the battery 100 have a larger volume and weight, which lead to over design of the battery 100 easily.

The definition of the top cover thickness $T_1$ can be the same as the definition of the top cover thickness $T_1$ in the aforementioned embodiments.

The bottom plate thickness $T_3$ can refer to the thickness at any location on the bottom plate 24, and the bottom plate thickness $T_3$ can also refer to the average thickness at multiple locations on the bottom plate 24. In some embodiments, the bottom plate thickness $T_3$ can refer to the minimum thickness possessed by the bottom plate 24. In some other embodiments, the bottom plate thickness $T_3$ can refer to the average thickness of the entire bottom plate 24.

In some embodiments, the bottom plate thickness $T_3$ can be greater than the top cover thickness $T_1$, so that the bottom plate 24 for supporting the battery cell 1 has a good structural strength.

By setting the relationship between the top cover thickness $T_1$ and the bottom plate thickness $T_3$ reasonably, the top cover 22 and the bottom plate 24 are less likely to have excessive thickness, while meeting the structural strength.

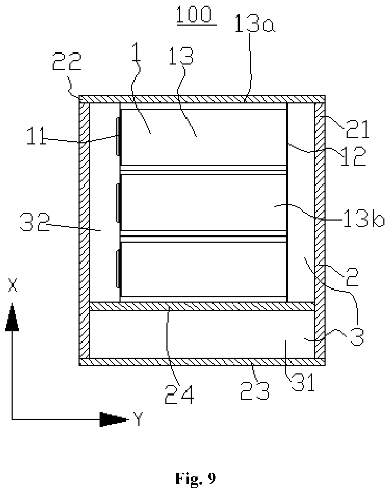

Fig. 8 is a cross-sectional schematic diagram of the battery cells 1 arranged side by side in the first direction X in some embodiments of the present application, and Fig. 9 is a cross-sectional schematic diagram of the battery cells 1 arranged side by side in the third direction Z in some other embodiments of the present application.

As shown in Figs. 8 and 9, in some embodiments, multiple battery cells 1 are arranged side by side along the first direction X and/or the third direction Z, the side walls 13 of the two adjacent battery cells 1 are connected with each other, and any two of the first direction X, second direction Y, and third direction Z intersects with each other.

In some embodiments, the large side walls 13a and/or the small side walls 13b of the two adjacent battery cells 1 can be correspondingly arranged to be connected with each other according to the structure and the size of the case 2 and the battery cell 1.

In some embodiments, when multiple battery cells 1 are arranged side by side along the first direction X, the large side wall 13a of the battery cell 1 on a side close to the bottom plate 24 can be arranged to be connected to the bottom plate 24, and the large side walls 13a of the two adjacent battery cells 1 can be arranged to be connected with each other, so that the battery cell 1 and the bottom plate 24 have a large stress area therebetween, thereby improving the structural stability inside the battery 100.

In some embodiments, when multiple battery cells 1 are arranged side by side along the third direction Z, the small side walls 13b of the battery cells 1 can be arranged to be connected to the bottom plate 24, and the large side walls 13a of the two adjacent battery cells 1 can be arranged to be connected with each other, so that the two adjacent battery cells 1 have a large contact area therebetween, thereby improving the structural stability inside the battery 100.

By arranging multiple battery cells 1 side by side along the first direction X and/or the third direction Z, the electrode terminals 11 of the multiple battery cells 1 are all oriented toward the second gap 32, thereby further improving the space utilization rate in the battery 100 and making the structure of the battery 100 more compact. The side-by-side arrangement of multiple battery cells 1 also improves the structural strength of the battery 100.

In some embodiments, the number $n$ of battery cells 1, the weight G of a single battery cell 1, the top cover thickness $T_1$ of the top cover 22, and the bottom plate thickness $T_3$ of the bottom plate 24 satisfy the following relationship: $0.1 \leq (T_1 + T_3)/n * G \times 16.5$. When the ratio of the sum of the top cover thickness $T_1$ and the bottom plate thickness $T_3$ to the total weight of all battery cells 1 is less than 0.1, the structural strength of case 2 is relatively small, and the case 2 is susceptible to deformation or even fracture due to the weight of the battery cells 1. When the ratio of the sum of the top cover thickness $T_1$ and the bottom plate thickness $T_3$ to the total weight of all battery cells 1 is greater than 16.5, the top cover 22 and bottom plate 24 which are excessively thick can easily cause the battery 100 to have a larger volume and weight, which leads to over design of battery 100 easily.

The unit of the weight G of the battery cell 1 is kg, and the unit of the top cover thickness $T_1$ and the bottom plate thickness $T_3$ is mm. Among them, the definition of the top cover thickness $T_1$ and the bottom plate thickness $T_3$ can be the same as the definition of the top cover thickness $T_1$ and the bottom plate thickness $T_3$ in the aforementioned embodiments.

By reasonably setting the number $n$ of battery cells 1, the weight G of a single battery cell 1, and the relationship between the top cover thickness $T_1$ and the bottom plate thickness $T_3$, the top cover 22 and the bottom plate 24 are less likely to have excessive thickness, while meeting the structural strength for bearing the battery cell 1.

In some embodiments, a buffer component (not shown in the figures) is filled between the top cover 22 and the bottom cover 23 for providing cushioning when the battery 100 is impacted.

The buffer component can be a foamed material. In some embodiments, the buffer component can be a foamed polyurethane or melamine foam.

In some embodiments, when the electrode terminal 11 orients toward the first gap 31, the buffer component can be filled between the electrode terminal 11 and the bottom cover 23, so that the buffer component can be used to cushion the collision between the electrode terminal 11 and the bottom cover 23.

In some other embodiments, when the electrode terminal 11 orients toward the second gap 32, the buffer component can be filled between the bottom plate 24 and the bottom cover 23, so that the buffer component can be used to cushion the collision between the bottom plate 24 and the bottom cover 23.

In some embodiments, a buffer component may also be filled between the battery cell 1 and the case body 21, so that the buffer component can be used to cushion collision between the battery cell 1 and the case body 21.

By providing a buffer component that can provide cushioning between the top cover 22 and the bottom cover 23, the collision resistance of the battery 100 is improved.

In some embodiments, the number $n$ of the battery cells 1 is less than or equal to 10.

By setting a reasonable number of the battery cells 1, the case 2 does not need to bear excessive weight of battery cells 1, so that the required volume of the case 2 does not need to be too large, thereby improving the structural utilization rate of the battery 100.

According to some embodiments of the present application, the further some embodiments of the present application further provide an electricity consuming apparatus, which includes the battery 100 in any of the above embodiments for providing electrical energy.

According to some embodiments of the present application, there is provided a battery 100, which includes a case 2 and a battery cell 1. The case 2 includes a case body 21, and a top cover 22 and a bottom cover 23 arranged opposite to each other in the first direction X on both sides of the case body 21. The battery cell 1 is arranged inside the case 2 and includes an electrode terminal 11 and a bottom 12 arranged opposite to each other, as well as a side wall 13 connected between the electrode terminal 11 and the bottom 12. There is a first gap 31 between the battery cell 1 and the bottom cover 23, there is a second gap 32 between the battery cell 1 and the case body 21, and the electrode terminal 11 is arranged toward the first gap 31 and/or the second gap 32. When the battery cell 1 is arranged toward the first gap 31, multiple battery cells 1 are arranged side by side along the second direction Y and/or the third direction Z, and the bottom 12 of the battery cell 1 is connected to the top cover 22 of the case 2. A buffer material is filled between the electrode terminal 11 and the bottom cover 23. The number $n$ of battery cells 1, the weight $G$ of a single battery cell 1, the top cover thickness $T_1$ of the top cover 22, and the bottom cover thickness $T_2$ of the bottom cover 23 meet the following relationship: $0.1 \leq (T_1 + T_2)/n * G \leq 16.5$, wherein the number $n$ of the battery cells 1 is less than or equal to 10. When the battery cell 1 is arranged toward the second gap 32, multiple battery cells 1 are arranged side by side along the first direction X and/or the third direction Z, and the case 2 further has a bottom plate 24 arranged between the top cover 22 and the bottom cover 23. The side wall 13 of the battery cell 1 close to the side of the bottom plate 24 is connected to the bottom plate 24, and a buffer material is filled between the bottom plate 24 and the bottom cover 23. The number $n$ of the battery cells 1, the weight $G$ of a single battery cell 1, the top cover thickness $T_1$ of the top cover 22 and the bottom plate thickness $T_3$ of the bottom plate 24 meet the following relationship: $0.1 \leq (T_1 + T_3)/n * G \leq 16.5$, wherein the number $n$ of battery cells 1 is less than or equal to 10.

The skilled person in the art should understand that the above embodiments are exemplary rather than restrictive. The different technical features that appear in different embodiments can be combined to achieve beneficial effects. On the basis of studying the accompanying drawings, specifications, and claims, the skilled person in the art should be able to understand and implement other variations of the disclosed embodiments. In the claims, the term "comprise" does not exclude other devices or steps. The articles "a", "an" and "the" are not intended to refer to only a singular entity, but include a description of a plurality of entities, and can be used interchangeably with "one" or "at least one". The terms "first" and "second" are used to indicate a name rather than any specific order. Any reference signs in the claims should not be construed as limiting the scope of protection. The functions of multiple parts appearing in the claims may be implemented by a separate hardware or software module. The appearance of certain technical features in different dependent claims does not mean that they cannot be combined to achieve beneficial effects.

**Claims**

1. A battery, comprising:

   a case (2) comprising a case body (21), and a top cover (22) and a bottom cover (23) arranged opposite to each other in a first direction on two sides of the case body (21); and
   a battery cell (1) arranged inside the case (2), the battery cell (1) comprising an electrode terminal (11),
   wherein a gap (3) is provided between the battery cell (1) and at least one of the bottom cover (23) and the case body (21), and the electrode terminal (11) is arranged toward the gap (3).

2. The battery according to claim 1, wherein the gap (3) comprises a first gap (31) between the battery cell (1) and the bottom cover (23), the electrode terminal (11) orientates toward the first gap (31), the battery cell (1) further comprises a bottom (12) opposite to the electrode terminal (11) in the first direction, and the bottom (12) is connected to the top cover (22).

3. The battery according to claim 2, wherein a top cover thickness $T_1$ of the top cover (22) and a bottom cover thickness $T_2$ of the bottom cover (23) satisfy the following relationship:

$$0.3mm \leq T_1 + T_2 \leq 16.5mm$$

4. The battery according to claim 2, wherein the battery cell (1) further comprises a side wall (13) connected between the electrode terminal (11) and the bottom (12),
   wherein a plurality of battery cells (1) are arranged side by side along a second direction and/or a third direction, and the side walls (13) of two adjacent battery cells (1) are connected with each other, and any two of the first direction, the second direction, and the third direction intersect with each other.

5. The battery according to claim 4, wherein a number $n$ of the battery cells (1), a weight $G$ of a single battery cell (1), a top cover thickness $T_1$ of the top cover (22), and a bottom cover thickness $T_2$ of the bottom cover (23) satisfy the following relationship:

$$0.1 \leq (T_1 + T_2)/n * G \leq 16.5$$

6. The battery according to claim 1, wherein the gap (3) comprises a second gap (32) between the battery cell (1) and the case body (21), and the electrode terminal (11) is arranged toward the second gap (32).

7. The battery according to claim 6, wherein the case (2) further comprises a bottom plate (24) arranged between the top cover (22) and the bottom cover (23), the battery cell (1) further comprises a bottom (12) opposite to the electrode terminal (11) in the second direction, and a side wall (13) connected between the electrode terminal (11) and the bottom (12), the side wall (13) is connected to the bottom plate (24), the bottom plate (24) and the bottom cover (23) are spaced apart, and the first direction intersects with the second direction.

8. The battery according to claim 7, wherein a top cover thickness $T_1$ of the top cover (22) and a bottom plate thickness $T_3$ of the bottom plate (24) satisfy the following relationship:

$$0.3mm \leq T_1 + T_3 \leq 16.5mm$$

9. The battery according to claim 7, wherein a plurality of battery cells (1) are arranged side by side along the first direction and/or a third direction, the side walls (13) of two adjacent battery cells (1) are connected to each other, and any two of the first direction, the second direction and the third direction intersect with each other.

10. The battery according to claim 9, wherein a number $n$ of the battery cells (1), a weight $G$ of a single battery cell (1), a top cover thickness $T_1$ of the top cover (22), and a bottom plate thickness $T_3$ of the bottom plate (24) satisfy the following relationship:

$$0.1 \leq (T_1 + T_3)/n * G \leq 16.5$$

11. The battery according to any one of claims 1 to 10, wherein a buffer component for providing cushioning when the battery is impacted is filled between the top cover (22) and the bottom cover (23).

12. The battery according to any one of claims 1 to 10, wherein a number $n$ of battery cells (1) is less than or equal to 10.

13. An electricity consuming apparatus, comprising the battery according to any one of claims 1 to 12, the battery being configured for providing electrical energy.

**Fig. 1**

**Fig. 2**

**Fig. 3**

**Fig. 4**

100

**Fig. 5**

100

**Fig. 6**

100

13a

22    1    13    13b

32

11

2

X

Y

24    23    31

12

21

3

**Fig. 7**

100

Y

13a

1    13

11

Z

12

2

13b

32

21

3

24

**Fig. 8**

**Fig. 9**

## INTERNATIONAL SEARCH REPORT

International application No.

**PCT/CN2022/123501**

| A. | CLASSIFICATION OF SUBJECT MATTER |
|---|---|

H01M50/547(2021.01)i

According to International Patent Classification (IPC) or to both national classification and IPC

| B. | FIELDS SEARCHED |
|---|---|

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 极柱, 端子, 碰撞, 冲击, 缓冲, 间隙, 空间, 利用, cell, battery, pole, electrode, terminal, impact, crash, buffer, gap, interspace, lacuna, space, utiliz+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115101880 A (CALB GROUP CO., LTD.) 23 September 2022 (2022-09-23) description, paragraphs 3-76, and figures 1-6 | 1-13 |
| X | CN 217182349 U (CALB GROUP CO., LTD.) 12 August 2022 (2022-08-12) description, paragraphs 3-126, and figures 1-9 | 1-13 |
| X | CN 216698608 U (CONTEMPORARY AMPEREX TECHNOLOGY CO., LTD.) 07 June 2022 (2022-06-07) description, paragraphs 5-113, and figures 1-12 | 1-13 |
| A | CN 217134495 U (CONTEMPORARY AMPEREX TECHNOLOGY CO., LTD.) 05 August 2022 (2022-08-05) entire document | 1-13 |
| A | CN 216903182 U (CONTEMPORARY AMPEREX TECHNOLOGY CO., LTD.) 05 July 2022 (2022-07-05) entire document | 1-13 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 May 2023** | **10 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/123501**

| Patent document cited in search report | | | Publication date (day/month/year) | Patent family member(s) | Publication date (day/month/year) |
|---|---|---|---|---|---|
| CN | 115101880 | A | 23 September 2022 | None | |
| CN | 217182349 | U | 12 August 2022 | None | |
| CN | 216698608 | U | 07 June 2022 | None | |
| CN | 217134495 | U | 05 August 2022 | None | |
| CN | 216903182 | U | 05 July 2022 | None | |

Form PCT/ISA/210 (patent family annex) (July 2022)